# EUROPÄISCHE PATENTSCHRIFT

(11) **EP 2 888 613 B1**
(45) Veröffentlichungstag und Bekanntmachung des Hinweises auf die Patenterteilung: **28.09.2016**
(21) Anmeldenummer: 13753150.5
(22) Anmeldetag: 19.08.2013
(51) Int. Cl.: G01V 5/00

(54) **SYSTEM ZUM BERÜHRUNGSLOSEN KONTROLLIEREN VON CONTAINERN, INSBESONDERE ISO-CONTAINERN, INNERHALB EINER UMSCHLAGANLAGE**
SYSTEM FOR THE CONTACTLESS INSPECTION OF CONTAINERS, PARTICULARLY ISO CONTAINERS, WITHIN A LOADING AND UNLOADING PLANT
SYSTÈME DE COMMANDE SANS CONTACT DE CONTENEURS, NOTAMMENT DE CONTENEURS ISO DANS UNE INSTALLATION DE TRANSBORDEMENT

(30) Priorität: 24.08.2012 DE 102012107815
(43) Veröffentlichungstag der Anmeldung: 01.07.2015
(73) Patentinhaber: Terex MHPS IP Management GmbH, 40597 Düsseldorf (DE)
(72) Erfinder: WIESCHEMANN, Armin, 46119 Oberhausen (DE); EICHNER, Heinz-Christoph, 40878 Ratingen (DE)
(74) Vertreter: Moser Götze & Partner Patentanwälte mbB
(86) Internationale Anmeldenummer: PCT/EP2013/067249
(87) Internationale Veröffentlichungsnummer: WO 2014/029742

(56) Entgegenhaltungen:
- DE-A1-102004 050 421
- DE-U1- 20 309 047
- US-A1- 2005 036 854
- US-A1- 2008 025 825

## Beschreibung

Die Erfindung betrifft ein System zum berührungslosen Kontrollieren von Containern, insbesondere ISO-Containern, innerhalb einer Umschlaganlage mit einer Kontrollstation, mit mindestens einer in der Kontrollstation angeordneten Durchleuchtungsvorrichtung, mit einem flurgebundenen, gummibereiften und im Automatikbetrieb geführten fahrerlosen Transportfahrzeug, wobei das fahrerlose Transportfahrzeug dazu eingerichtet ist, den zu kontrollierenden Container zu der Kontrollstation hin und von der Kontrollstation weg zu transportieren.

Aus der deutschen Offenlegungsschrift DE 103 13 248 A1 ist bereits eine bemannte mobile Plattform für eine berührungslose Kontrolle von Containern bekannt, die in Häfen mittels einer Containerbrücke umgeschlagen werden. Die Plattform ist der Funktion nach mit einem Portalkran vergleichbar und über einen Portalrahmen auf Schienen parallel und unterhalb einer Containerbrücke sowie unabhängig von der Containerbrücke entlang eines Kais verfahrbar. Um zu kontrollierende Container von dem Kai aufnehmen und nach der Kontrolle wieder absetzen zu können, weist die Plattform eine Hubvorrichtung und einen auf dem Portalrahmen angeordneten Abstellplatz für die Container auf. Im Bereich des Abstellplatzes ist eine Durchleuchtungsvorrichtung angeordnet, die im Wesentlichen aus einer Strahlenquelle, einem gegenüberliegend angeordneten Strahlendetektor und einer Abschirmung besteht. Mittels der Strahlenquelle wird der Container mit Röntgen- und/oder Gammastrahlen im Wesentlichen horizontal durchleuchtet. Die Abschirmung dient zum Schutz der die Plattform beziehungsweise die Durchleuchtungsvorrichtung bedienenden Personen.

Des Weiteren ist aus der deutschen Offenlegungsschrift DE 11 2004 001 701 T5 bereits ein System für die Inspektion von Gütern in einem Container im Bereich von Häfen bekannt. Der Container befindet sich hierbei auf einer Transportfläche eines Lastkraftwagens. Das System besteht im Wesentlichen aus einer Durchleuchtungsvorrichtung und einer Abschleppvorrichtung für den Lastkraftwagen. Die Durchleuchtungsvorrichtung ist stationär angeordnet und weist eine Strahlenquelle, einen ersten Kollimator, einen zweiten Kollimator und einen Detektor auf. Die Strahlenquelle ist schwenkbar ausgebildet, um die hiervon ausgesandten Durchleuchtungsstrahlen in Bezug auf die vertikale Position des Containers auf dem Lastkraftwagen auszurichten. Hierdurch ist eine Anpassung der Durchleuchtungsvorrichtung an unterschiedliche vertikale Höhen der Transportflächen der Lastkraftwagen möglich. Der Container wird im Wesentlichen horizontal durchleuchtet. Da die Durchleuchtungsvorrichtung stationär ausgebildet ist, wird der Lastkraftwagen von der Abschleppvorrichtung entlang einer Durchleuchtungsgasse an der Durchleuchtungsvorrichtung vorbei geschleppt. Die Abschleppvorrichtung besteht aus einem Abschleppwagen, der über eine Winde und ein Stahlseil entlang der Durchleuchtungsgasse gezogen wird. Hierbei wird der Lastkraftwagen klemmend über seine Vorderräder mit dem Abschleppwagen verbunden.

Ferner ist in der deutschen Offenlegungsschrift DE 10 2009 025 051 A1 ein fahrerloses Schwerlast-Transportfahrzeug für Container beschrieben. Als Einsatzbereiche für dieses Transportfahrzeug sind der Umschlag von Containern im Hafenbereich und im intermodalen Verkehr zwischen Schiene und Straße angegeben, in denen das Transportfahrzeug unbemannt in einem Automatikbetrieb seine Transportaufgaben bewältigt. Das flurgebundene Schwerlast-Transportfahrzeug ist gummibereift und als Vierradfahrzeug ausgebildet. Es besteht im Wesentlichen aus einem Fahrzeugrahmen, an dem an einer Vorderachse zwei vordere Räder und an einer Hinterachse zwei hintere Räder gelagert sind. Von dem Fahrzeugrahmen wird eine ebene Plattform getragen, die zur Aufnahme der zu transportierenden Container dient. Diese Plattform kann passiv ausgestaltet sein, d.h. die Container müssen von einem geeigneten Umschlaggerät aufgenommen werden beziehungsweise darauf abgestellt werden. Auch kann diese Plattform aktiv ausgestaltet sein. Dann ist die Plattform über eine Hubvorrichtung heb- und senkbar und kann die Container von einem ortsfesten Traggestell aufnehmen beziehungsweise darauf absetzen. Angetrieben ist dieses Transportfahrzeug über einen Elektromotor je Achse, die von einer unten an dem Fahrzeugrahmen aufgehängten Bleibatterie gespeist sind.

Ferner ist in der Patentanmeldung US 2008/0025825 A1 ein System zum Durchleuchten von Containern in einem Kaibereich beschrieben. Die von einem Kaikran umgeschlagenen Container werden auf fahrerlose Transportfahrzeuge abgeladen. Die fahrerlosen Transportfahrzeuge durchfahren mit den Containern dann eine Durchleuchtungsvorrichtung, in der die Container horizontal durchleuchtet werden. Anschließend werden die Container in einer Übergabevorrichtung durch einen Zaun hindurch in einen bemannt befahrbaren Bereich des Kais gefördert und dort von bemannten Containertransportfahrzeugen aufgenommen.

Die weitere deutsche Patentanmeldung DE 10 2007 063 201 A1 bezieht sich auf eine mittels eines Lastkraftwagens verfahrbare Durchleuchtungsvorrichtung für Frachtcontainer, deren Detektoren horizontal und vertikal ausgerichtet sind.

In der deutschen Patentanmeldung DE 101 60 928 A1 wird eine weitere Durchleuchtungsvorrichtung für Frachtcontainer offenbart, die auf einem Zwischenträger einer Container-Umschlagbrücke mit einer Kranlaufkatze angeordnet ist. Die Durchleuchtungsvorrichtung weist neben einer Röntgenvorrichtung Traggerüste zum Abstellen der zu durchleuchtenden Container auf. Die Container werden von der Kranlaufkatze auf den Traggerüsten abgestellt und von diesen aufgenommen. Die Durchleuchtungsvorrichtung ist insgesamt auf dem Zwischenträger horizontal verfahrbar.

Die amerikanische Patentanmeldung US 2005/036854 A1 offenbart ein System zum berührungslosen Kontrollieren von Containern. Das System umfasst einen flurfrei verfahrbaren Brückenkran und eine unterhalb des Brückenkrans aufgeständerte Kontrollstation mit einer verfahrbaren Durchleuchtungsvorrichtung. Um einen Container zu kontrollieren, muss dieser mittels des Brückenkrans von einem flurgebundenen, bemannten Transportfahrzeug in die Kontrollstation gehoben und dort gehalten werden. Über den Brückenkran wird der Container anschließend wieder von der Kontrollposition weg bewegt und auf dem Transportfahrzeug abgeladen.

Ein vergleichbares System, bei dem ein zu kontrollierender Container über einen Kran in eine aufgeständerte Kontrollstation gehoben wird, ist auch in der deutschen Offenlegungsschrift DE 10 2004 050 421 A1 beschrieben.

In der deutschen Gebrauchsmusterschrift DE 203 09 047 U1 ist ein System zum berührungslosen Kontrollieren von Containern beschrieben, das eine Kontrollstation in Form eines Abtastkanals mit einer stationären Durchleuchtungsvorrichtung umfasst. Ein zu kontrollierender Container wird mit einem bemannten Lastkraftwagen zu dem Abtastkanal hin transportiert und während des Kontrollvorgangs über Zugseile durch den Abtastkanal hindurch gezogen. Anschließend wird der Container von dem Lastkraftwagen von dem Abtastkanal weg transportiert.

Der vorliegenden Erfindung liegt die Aufgabe zu Grunde, ein sicheres System zum berührungslosen Kontrollieren von Containern, insbesondere ISO-Containern, innerhalb einer Umschlaganlage zu schaffen.

Diese Aufgabe wird durch ein System zum berührungslosen Kontrollieren von Containern mit den Merkmalen des Anspruchs 1 gelöst. Vorteilhafte Ausgestaltungen der Erfindung sind in den Ansprüchen 2 bis 5 angegeben.

Erfindungsgemäß wird bei einem System zum berührungslosen Kontrollieren von Containern, insbesondere ISO-Containern, innerhalb einer Umschlaganlage mit einer Kontrollstation, mit mindestens einer in der Kontrollstation angeordneten Durchleuchtungsvorrichtung, mit einem flurgebundenen, gummibereiften und im Automatikbetrieb geführten fahrerlosen Transportfahrzeug, wobei das fahrerlose Transportfahrzeug dazu eingerichtet ist, den zu kontrollierenden Container zu der Kontrollstation hin und von der Kontrollstation weg zu transportieren, eine sichere Kontrolle dadurch erreicht, dass das fahrerlose Transportfahrzeug dazu eingerichtet ist, den Container für den Kontrollvorgang in der Kontrollstation abzustellen, die mindestens eine Durchleuchtungsvorrichtung dazu eingerichtet ist, sich entlang des Containers zu bewegen und hierbei den Container zu kontrollieren und das fahrerlose Transportfahrzeug dazu eingerichtet ist, den Container nach dem Kontrollvorgang in der Kontrollstation aufzunehmen. Die bewegbare Durchleuchtungsvorrichtung kann dabei ein Portalscanner umfassen. Zusätzlich kann ein fahrbarer Detektor vorgesehen sein, wobei der fahrbare Detektor unterhalb des Containers in der Kontrollstation verfahrbar ist. Dazu kann es sich z.B. um ein Schienenfahrwagen oder ein fahrerloses Transportfahrzeug mit Gummibereifung handeln. Die Bewegungen des Portalscanners und ggf. des fahrbaren Detektors erfolgen dann synchronisiert.

Durch dieses System wird vorteilhafter Weise erreicht, dass der Kontrollbeziehungsweise Durchleucht- oder Scanvorgang in der Kontrollstation einerseits in den Betrieb von automatisch verfahrbaren Transportfahrzeugen integriert wird und das Scannen des Containers ohne Anwesenheit von Personen in der Nähe des Containers erfolgen kann. Somit sind keine zusätzlichen Schutzmaßnahmen für Fahrer von Transportfahrzeugen oder Lastkraftwagen notwendig. Auch können erkannte gefährliche Container ohne menschlichen Einfluss entsorgt werden.

Es ist vorteilhaft vorgesehen, dass das System eine erste Durchleuchtungsvorrichtung umfasst, die dazu eingerichtet ist, den Container horizontal zu durchleuchten.

Außerdem ist vorteilhafter Weise vorgesehen, dass das System eine zweite Durchleuchtungsvorrichtung umfasst, die dazu eingerichtet ist, den Container vertikal zu durchleuchten. Hierdurch wird die Sicherheit weiter erhöht.

In konstruktiv vorteilhafter Ausgestaltung ist vorgesehen, dass in der Kontrollstation im Bereich der mindestens einen Durchleuchtungsvorrichtung ein stationäres Traggestell angeordnet ist, das fahrerlose Transportfahrzeug dazu eingerichtet ist, den Container für den Kontrollvorgang auf dem stationären Traggestell abzustellen und nach dem Kontrollvorgang von dem stationären Traggestell aufzunehmen.

Das erfindungsgemäße System eignet sich insbesondere für eine Umschlaganlage in einem Hafenbereich, für Container die Seefracht-Container sind.

Nachfolgend wird die Erfindung an Hand eines in einer Zeichnung dargestellten Ausführungsbeispiels näher beschrieben. Es zeigen:
Figur 1 einen wasserseitigen Ausschnitt eines Übersichtsplans einer Umschlaganlage für Container in einem Hafenbereich,
Figur 2 eine Ausschnittsvergrößerung von Figur 1 aus dem Bereich einer Kontrollstation,
Figur 3 eine Vorderansicht auf einen Container in einer Kontrollstation gemäß Figur 2
Figur 4 eine Vorderansicht auf ein Transportfahrzeug mit einem Container.

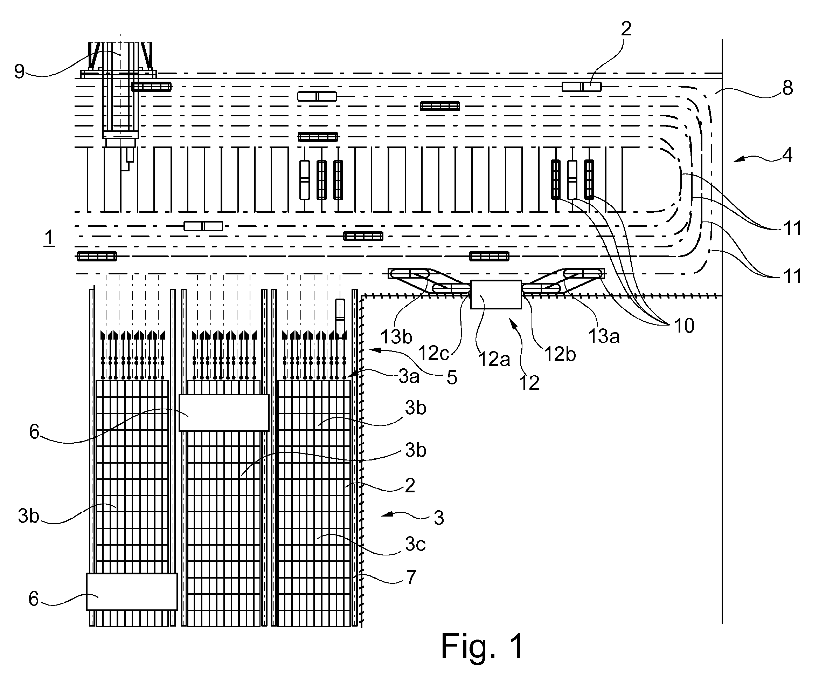

Die Figur 1 zeigt einen wasserseitigen Ausschnitt eines Übersichtsplans einer Umschlaganlage 1 in einem Hafenbereich, in dem Container 2 umgeschlagen werden. Im Sinne der Erfindung werden unter Containern 2 ISO-Container verstanden. ISO-Container wiegen bis zu etwa 38 t und werden allgemein als genormte Großbehälter mit genormten Aufnahmepunkten oder -ecken für Lastaufnahmemittel verstanden. ISO-Container sind üblicher Weise 20, 40 oder 45 Fuß lang. Auch ISO-Container in einer Länge von 53 Fuß gibt es bereits. Im Bereich der ISO-Container sind neben den geschlossenen Containern auch Kühl-Container - sogenannte Reefer - und eine Vielzahl anderer Containertypen bekannt.

Der Übersichtsplan zeigt nur einen Ausschnitt der Umschlaganlage 1, lässt jedoch einen Teil der wesentlichen Bestandteile erkennen. Die Umschlaganlage 1 besteht im Wesentlichen aus einem nicht dargestellten landseitigen Umschlagbereich, einem Lager 3 und einem wasserseitigen Umschlagbereich 4.

Das Lager 3 besteht aus einer Vielzahl von parallel nebeneinander und zeilenartig angeordneten Lagerbereichen 3b, denen jeweils an ihrem wasserseitigen Ende 3a ein wasserseitiger Ein- und Auslagerungsbereich 5 zugeordnet ist. Jeder Lagerbereich 3b weist einen oder mehrere, vorzugsweise zwei Containerstapelkrane 6 auf, die entlang der Lagerbereiche 3b auf gemeinsamen oder getrennten Schienen 7 verfahrbar sind. Von den Containerstapelkranen 6 werden die Container 2 zwischen dem Lagerbereich 3b und einem nicht dargestellten landseitigem Be- und Entladebereich beziehungsweise dem wasserseitigen Ein- und Auslagerungsbereich 5 transportiert. Jeder Lagerbereich 3b weist neben dem einen oder mehreren Containerstapelkranen 6 auch einen Abstellbereich 3c für die Container 2 auf. Der Abstellbereich 3c hat eine rechteckige und langgestreckte Grundfläche, auf dem die Container 2 in Spalten und Zeilen angeordnet sowie übereinander gestapelt zwischengelagert werden können.

Jeder der wasserseitigen Ein- und Auslagerungsbereiche 5 stellt eine Schnittstelle zwischen dem Lager 3 und dem wasserseitigen Umschlagbereich 4 dar, der im vorliegenden Fall im Wesentlichen mit einem Kai 8 übereinstimmt, an dem die zu be- und entladenden Schiffe (nicht dargestellt) anlegen. Zwischen den Ein- und Auslagerungsbereichen 5 und entlang des Kais 8 angeordneten Umschlagbrücken 9 für die Be- und Entladung der Schiffe werden die Container 2 von fahrerlosen Transportfahrzeugen 10 gefördert. Diese fahrerlosen Transportfahrzeuge 10 können allgemein als fahrende Plattformen umschrieben werden, auf denen die Container 2 für den Transport abgestellt werden. Diese Plattform kann passiv sein und somit müssen dann die Container 2 von dem Containerstapelkran 6, der Umschlagbrücke 9 oder anderen verfügbaren Umschlaggeräten auf- und abgeladen werden. Die fahrerlosen Transportfahrzeuge 10 können auch eine aktive und somit heb- und senkbare Plattform aufweisen, um den Container 2 aktiv auf nicht dargestellte ortsfeste Traggestelle im Bereich der Ein- und Auslagerungsbereiche 5, von Zwischenlagerplätzen und/oder der Umschlagbrücken 9 abzustellen oder von diesen aufzunehmen. Die Transportfahrzeuge 10 können batteriebetrieben sein oder einen dieselelektrischen Antrieb haben und werden im Automatikbetrieb geführt. Demnach werden die Transportfahrzeuge 10 unbemannt betrieben. In der Figur 1 sind virtuelle Fahrspuren 11 für die Transportfahrzeuge 10 dargestellt, um deren übliche Fahrtrouten aufzuzeigen. Die Transportfahrzeuge 10 sind jedoch frei navigierbar.

Außerdem ist im Bereich des wasserseitigen Umschlagbereichs 4 eine Kontrollstation 12 angeordnet, in der die Container 2 und deren Inhalt einer berührungslosen Inspektion unterzogen werden können, mit dem Ziel unerlaubte und/oder gefährliche Gegenstände oder Stoffe in dem Container 2 zu entdecken.

Diese Kontrollstation 12 liegt am Rande und außerhalb der üblichen Fahrspuren 11 für die Transportfahrzeuge 10 in dem wasserseitigen Umschlagbereich 4 und ist als stationäres Gebäude 12a ausgebildet. Damit die Transportfahrzeuge 10 die Kontrollstation 12 erreichen können, schließt sich an die äußerste der Fahrspuren 11 eine Abfahrtsspur 13a an, die an einer Einfahrt 12b der Kontrollstation 12 endet. An dem gegenüberliegenden Ende der Kontrollstation 12 schließt sich eine Ausfahrt 12c an, die über eine Auffahrtsspur 13b mit der äußersten der Fahrspuren 11 verbunden ist. Die Kontrollstation 12 ist somit parallel nach außen versetzt zu der äußeren Fahrspur 11 angeordnet.

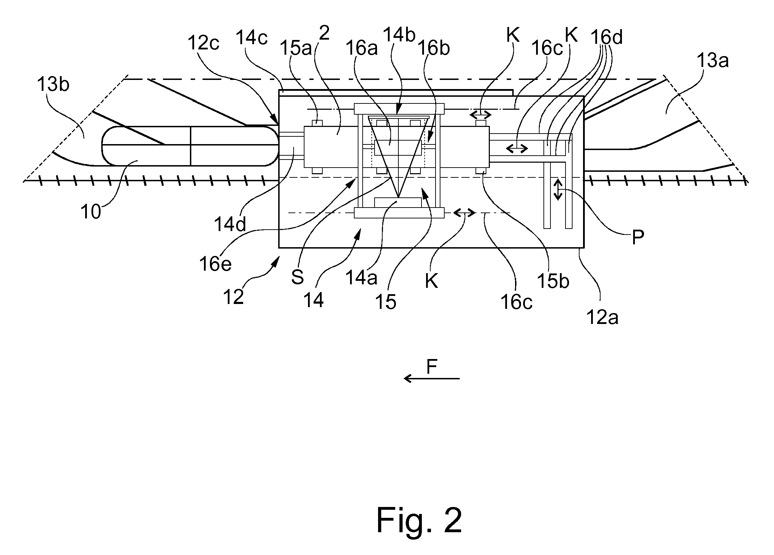

Die Figur 2 zeigt Ausschnittsvergrößerung von Figur 1 aus dem Bereich der Kontrollstation 12. Die Kontrollstation 12 umfasst ein quaderförmiges Gebäude 12a, von dem aus Gründen der Übersichtlichkeit in Figur 2 das Dach nicht gezeigt ist, um die weiteren Bestandteile der Kontrollstation 12 in dem Gebäude 12a zu zeigen. Die Kontrollstation 12 für die berührungslose Untersuchung der Container 2 und/oder der Ladung in dem Container 2 weist eine aus dem Stand der Technik bekannte Durchleuchtungsvorrichtung 14 auf, die im Wesentlichen aus einer ersten horizontal gerichteten Strahlenquelle 14a für eine Röntgen- und/oder Gammastrahlung; deren Strahlen durch die Linien S angedeutet sind, und einem gegenüberliegend angeordneten Strahlendetektor 14b besteht. Die Durchleuchtungsvorrichtung 14 mit der Strahlenquelle 14a und dem Strahlendetektor 14b grenzen gegenüberliegend an eine als Fahrweg für die Transportfahrzeuge 10 ausgebildete Durchleuchtungsgasse 14d an. Mittels der Strahlenquelle 14a wird der Container 2 und die Ladung mit Röntgen- und/oder Gammastrahlen im Wesentlichen horizontal durchleuchtet. Das stationäre Gebäude 12a dient hierbei mit seiner Außenwand als Abschirmung 14c.

Diese Anordnung und Ausbildung der Kontrollstation 12 hat den Vorteil, dass der zu kontrollierende Container 2 sich im wasserseitigen Umschlagbereich 4 bereits auf einem fahrerlosen Transportfahrzeug 10 befindet und somit für die Untersuchung einfach von dem fahrerlosen Transportfahrzeug 10 zu der Kontrollstation 12 gefahren werden kann. Da das Transportfahrzeug 10 fahrerlos ist, ist ein Ein- und Aussteigen von Fahrern, deren Schutz vor der Kontrollstrahlung und ein mannloses Fördern des Transportfahrzeuges 10 oder des Containers 2 nicht erforderlich.

In dieser Kontrollstation 12 ist neben einem berührungslosen Kontrollieren der Container 2 in Horizontal- und auch ein Kontrollieren in Vertikalrichtung möglich. Hierfür wird der Container 2 in der Kontrollstation 12 von dem fahrerlosen Transportfahrzeug 10 auf einem ortsfesten Traggestell 15 abgesetzt. Das Traggestell 15 besteht im Wesentlichen aus acht Stützen 15a, die in Fahrtrichtung F des automatischen Transportfahrzeuges 10 rechts und links einer Durchleuchtungsgasse 14d angeordnet sind. Der Container 2 ruht mit kurzen und schmalen Abschnitten seiner seitlichen rechten und linken Unterfläche 2c auf den Stützen 15a. Für den Absetzvorgang und den anschließenden Aufnahmevorgang ist das Transportfahrzeug 10 mit einem heb- und senkbaren plattformartigen Hubtisch 10b ausgestattet. Für den Absetzvorgang fährt das Transportfahrzeug 10 mit angehobenen Hubtisch 10b in das Traggestell 15 ein, so dass sich die Unterfläche 2c sich über Auflageflächen 15b der Stützen 15a befindet und senkt dann den Container 2 auf das Traggestell 15 ab. Für den Aufnahmevorgang fährt das Transportfahrzeug 10 mit abgesenktem Hubtisch 10b in das Traggestell 15 ein, bis es unter dem aufzunehmenden Container 2 zum Stehen kommt. Dann wir der Hubtisch 10b in Richtung der Unterfläche 2c des Containers 2 angehoben, bis der Hubtisch 10b den Container 2 von den Auflageflächen 15b der Stützen 15a abhebt. Hierbei sind die Abmessungen des Hubtisches 10b und der Stützen 15a so gewählt, dass der Hub- und Senkvorgang behinderungsfrei erfolgen kann.

Da das Traggestell 15 den Container 2 nur unten im Bereich seiner Längsseiten unterstützt und das Transportfahrzeug 10 unter dem Container 2 heraus gefahren ist, kann der Container 2 nun auch in Vertikalrichtung gescannt werden kann. Dazu ist eine zweite Durchleuchtungsvorrichtung 16 als verfahrbares Portal 16e vorgesehen.

Das Portal 16e umfasst eine Strahlenquelle 16a oberhalb des Containers 2 an einer Traverse, die Strahlenquelle 14a der ersten Durchleuchtungsvorrichtung 14 an einer Seite und den Strahlendetektor 14b auf der gegenüberliegenden Seite.

Gestrichelt unterhalb des Containers 2 ist der Strahlendetektor 16b gezeigt, der auf einem schienengeführten Wagen 16f verfahrbar ist.

Da der zu kontrollierende Container 2 nun in der Kontrollstation 12 auf den Traggestellen 15 ruht, sind die erste und die zweite Durchleuchtungsvorrichtung 14, 16 entlang des Containers 2 und somit des Traggestells 15 in einer Kontrollrichtung K verfahrbar ausgestaltet, wobei ihre Bewegungen synchronisiert werden.

Für das Portal 16e sind Schienen 16c und für den Wagen 16f sind Schienen 16d vorgesehen, die auf einem Boden der Kontrollstation 12 und parallel zur Fahrtrichtung F verlaufen.

Da die unteren Schienen 16c und 16d im Bereich der Durchleuchtungsgasse 14d verlaufen, damit der Strahlendetektor 16b nahe an der Unterseite 2c des Containers 2 entlang geführt werden kann, muss der auf dem Wagen 16f angeordnete Strahlendetektor 16b nach dem Kontrollvorgang aus der Durchleuchtungsgasse 14d heraus bewegt werden. Hierzu knicken die unteren Schienen 16d außerhalb des Traggestells 15 rechtwinklig ab, so dass der Strahlendetektor 16b in einer Parkrichtung P in eine Parkposition gefahren werden kann. Es versteht sich, dass die Schienen 16c, d auch kurvenartig verlaufen können. Auch der Einsatz eines gummibereiften fahrerlosen Transportfahrzeugs (AGV) für den Detektor 16b ist denkbar.

Die Verfahrwege für die Strahlenquelle 14a der ersten Durchleuchtungsvorrichtung 14, den Strahlendetektor 14b der ersten Durchleuchtungsvorrichtung 14 und die Strahlenquelle 16a der zweiten Durchleuchtungsvorrichtung 16 befinden sich außerhalb der von den Transportfahrzeug 10 mit dem Container 2 durchfahrenen Durchleuchtungsgasse 14d, so dass deren Schienen 16c nicht abknicken müssen sondern nur in Fahrtrichtung F verlaufen.

Ein als gefährlich eingestufter Container 2 oder ein Container 2 mit unerlaubter Ladung kann von dem fahrerlosen Transportfahrzeug 10 dann direkt in einen nicht dargestellten Sicherheitsbereich transportiert werden und dort automatisch abgeladen werden. Dieser Sicherheitsbereich kann auch explosionsgeschützt sein.

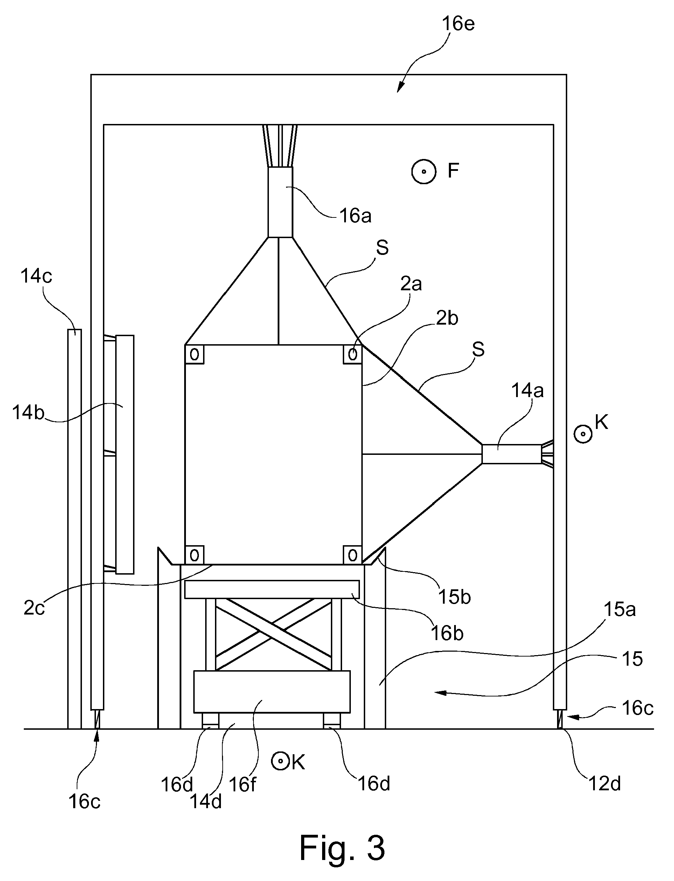

In der Figur 3 ist eine Vorderansicht auf einen Container 2 in einer Kontrollstation 12 gemäß Figur 2, der auf einem Traggestell 15 abgestellt ist, dargestellt. Aus Gründen der Übersichtlichkeit ist das Gebäude 12a der Kontrollstation 12 nicht dargestellt.

Zu diesem Zeitpunkt ist das Transportfahrzeug 10 bereits unter dem Container 2 heraus gefahren und der Wagen 16f des Strahlendetektors 16b der zweiten Durchleuchtungsvorrichtung 16 ist aus seiner Parkposition über die Schienen 16d in die Durchleuchtungsgasse 14d eingefahren, in der zuvor das Transportfahrzeug 10 verfahren ist. Der Container 2 ruht mit seiner Unterfläche 2c im Bereich der seitlichen Ränder auf den Auflageflächen 15b der Stützen 15a des Traggestells 15.

Da in dieser Ausführungsform für den horizontalen und vertikalen Kontrollvorgang der Container 2 in einer Kontrollposition ruht, sind die erste und zweite Durchleuchtungsvorrichtung 14 und 16 entlang des Containers 2 in Kontrollrichtung K synchronisiert zu verfahren.

Hierfür sind die Strahlenquelle 14a, der Strahlendetektor 14b der ersten Durchleuchtungsvorrichtung 14 und die Strahlenquelle 16a der zweiten Durchleuchtungsvorrichtung gemeinsam mittels des Portals 16e über Räder auf den Schienen 16c verfahrbar.

Der vierte angetriebene Wagen 16f des Strahlendetektors 16b rollt über seine Räder auf den beiden unteren Schienen 16d ab. Die Schienen 16d im Bereich der Durchleuchtungsgasse können auch in den Boden 12 d eingelassen sein, um die Verfahrbewegung des Transportfahrzeuges 10 nicht zu beeinträchtigen.

Zum Scanner des Containers 2 verfahren also das Portal 16e und der Wagen 16f synchronisiert längs des Containers entlang, um nach und nach den gesamten Container 2 abzufahren und ihn dabei zu durchleuchten. Entsprechend können die Strahlenquellen schwächer und die Detektoren kleiner ausfallen, da nicht der gesamte Container auf einmal durchleuchtet wird.

Auch ist aus der Figur 3 ersichtlich, dass die Strahlenquelle 14a der ersten Durchleuchtungsvorrichtung 14 seitlich neben der Durchleuchtungsgasse 14d und auf einer Höhe, die etwa der mittleren Höhe eines Containers 2 auf dem Transportfahrzeug 10 entspricht, angeordnet, so dass die Röntgen- bzw. Gammastrahlen der Strahlenquelle 14a entsprechend den Linien S den gesamten Container 2 durchleuchten. Ausgehend von der Strahlenquelle 14a treten die Röntgen- bzw. Gammastrahlen durch die rechte Längsseite 2b des Containers 2 in den Container 2 ein, durchwandern diesen und treten auf der linken gegenüber liegenden Längsseite 2b des Containers 2 aus. Dort treffen sie auf den Strahlendetektor 14b, der parallel zu der gegenüberliegenden Längsseite 2b des Containers 2 und mit geringem Abstand hierzu angeordnet ist. Die Größe des Strahlendetektors 14b entspricht somit mindestens der Größe der Längsseite 2b des zu kontrollierenden Containers 2. Der Strahlendetektor 14b ist in üblicher Weise mit nicht näher beschriebenen Auswerteeinrichtungen verbunden, um am Ende das gewünschte Durchleuchtungsbild des Inhalts des Containers 2 zu erhalten. Entsprechendes gilt für die vertikale Strahlenquelle 16a und deren Strahlendetektor 16b.

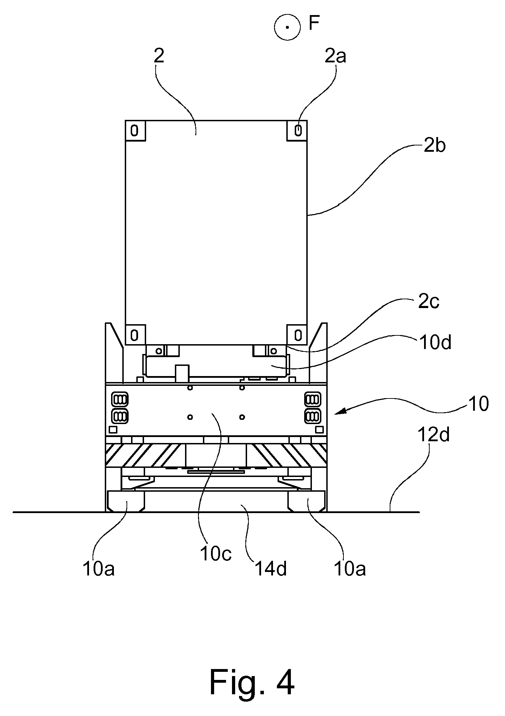

In der Figur 4 ist eine Vorderansicht auf das fahrerlose Transportfahrzeug 10 mit einem Container 2 dargestellt. In Bezug auf das Transportfahrzeug 10 ist zu erkennen, dass dieses im Wesentlichen aus einem Fahrzeugrahmen 10c besteht, der über insgesamt vier Gummireifen 10a an einer Vorder- und einer Hinterachse auf dem Boden 12d automatisch geführt verfahrbar ist. Auf dem Fahrzeugrahmen 10c sind ein erster heb- und senkbarer Hubtisch 10d und gegen die Fahrtrichtung F dahinter ein zweiter heb- und senkbarer Hubtisch 10e angeordnet. Auf den Hubtischen 10d und 10e ruht ein langer 40 oder 45 Fuß Container 2 oder ruhen hintereinander zwei 20 Fuß Container 2. Jeder im Wesentlichen quaderförmige Container weist in üblicher Weise Eckbeschläge 2a, Längsseiten 2b und eine Unterfläche 2c auf, mit der der Container 2 auf dem Hubtisch 10d, 10e ruht. Hierfür ist

Grundsätzlich kann die Kontrollstation 12 auch als mobile Gehäuseeinheit ausgebildet sein und an anderen geeigneten Stellen im wasserseitigen Umschlagbereich 4 angeordnet werden. Besonders geeignet ist eine Anordnung im Bereich der Umschlagbrücken 9. Die Kontrollstation 12 kann dann unabhängig von der Umschlagbrücken 9 aber bei Bedarf auch gemeinsam mit der Umschlagbrücke 9 entlang des Kais 8 bewegt werden. Auch grenzt diese Kontrollstation 12 dann vorzugsweise an die wassernächste Fahrspur 11 an. Des Weiteren kann Kontrollstation 12 klappbar ausgestaltet werden. Somit ist der Betrieb der Kontrollstation 12 optimal an die Betriebsbedingungen des Containerterminals anpassbar.

In Bezug auf die verfahrbaren ersten und zweiten Durchleuchtungsvorrichtungen 14 und 16 sind die ersten bis vierten Wagen bzw. Portale 14g, 14h, 16e und 16f als schienenverfahbar beschreiben. Alternativ sind jegliche Verschiebungsarten entlang von Führungen denkbar soweit diese erschütterungsarm sind, um das Durchleuchtungsergebnis nicht zu beeinträchtigen. Denkbar sind Linear- oder Gleitführungen. Auch sind gummibereifte Fahrwerke denkbar.

### Bezugszeichenliste

- 1: Umschlaganlage
- 2: Container
- 2a: Eckbeschlag
- 2b: Längsseite
- 2c: Unterfläche
- 3: Lager
- 3a: wasserseitiges Ende
- 3b: Lagerbereich
- 3c: Abstellbereich
- 4: wasserseitiger Umschlagbereich
- 5: Ein- und Auslagerungsbereich
- 6: Containerstapelkran
- 7: Schienen
- 8: Kai
- 9: Umschlagbrücke
- 10: fahrerloses Transportfahrzeug
- 10a: Gummireifen
- 10b: Hubtisch
- 10c: Fahrzeugrahmen
- 10d: erster Hubtisch
- 10e: zweiter Hubtisch
- 11: Fahrspur
- 12: Kontrollstation
- 12a: stationäres Gebäude
- 12b: Einfahrt
- 12c: Ausfahrt
- 12d: Boden
- 13a: Abfahrtsspur
- 13b: Auffahrsspur
- 14: erste Durchleuchtungsvorrichtung
- 14a: Strahlenquelle
- 14b: Strahlendetektor
- 14c: Abschirmung
- 14d: Durchleuchtungsgasse
- 15: Traggestell
- 15a: Stütze
- 15b: Auflagefläche
- 16: zweite Durchleuchtungsvorrichtung
- 16a: Strahlenquelle
- 16b: Strahlendetektor
- 16c: Schiene
- 16d: Schienen
- 16e: Portal
- 16f: vierter Wagen
- 17: Lastkraftwagen
- 18: Übergabestation

- F: Fahrtrichtung
- K: Kontrollrichtung
- P: Parkrichtung
- S: Linie

## Patentansprüche

1. System zum berührungslosen Kontrollieren von Containern (2), insbesondere ISO-Containern, innerhalb einer Umschlaganlage (1) mit einer Kontrollstation (12), mit mindestens einer in der Kontrollstation (12) angeordneten Durchleuchtungsvorrichtung (14, 16), mit einem flurgebundenen, gummibereiften und im Automatikbetrieb geführten fahrerlosen Transportfahrzeug (10), wobei das fahrerlose Transportfahrzeug (10) dazu eingerichtet ist, den zu kontrollierenden Container (2) zu der Kontrollstation (12) hin und von der Kontrollstation (12) weg zu transportieren, **dadurch gekennzeichnet, dass** das fahrerlose Transportfahrzeug (10) dazu eingerichtet ist, den Container (2) für den Kontrollvorgang in der Kontrollstation (12) abzustellen, die mindestens eine Durchleuchtungsvorrichtung (14, 16) dazu eingerichtet ist, sich entlang des Containers (2) zu bewegen und hierbei den Container (2) zu kontrollieren und das fahrerlose Transportfahrzeug (10) dazu eingerichtet ist, den Container (2) nach dem Kontrollvorgang in der Kontrollstation (12) aufzunehmen.

2. System nach Anspruch 1, **dadurch gekennzeichnet, dass** die mindestens eine Durchleuchtungsvorrichtung eine erste Durchleuchtungsvorrichtung (14) umfasst, die dazu eingerichtet ist, den Container (2) horizontal zu durchleuchten.

3. System nach Anspruch 1 oder 2, **dadurch gekennzeichnet, dass** das System eine zweite Durchleuchtungsvorrichtung (16) umfasst, die dazu eingerichtet ist, den Container (2) vertikal zu durchleuchten.

4. System nach einem der Ansprüche 1 bis 3, **dadurch gekennzeichnet, dass** in der Kontrollstation (12) im Bereich der mindestens einen Durchleuchtungsvorrichtung (14, 16) ein stationäres Traggestell (15) angeordnet ist, das fahrerlose Transportfahrzeug (10) dazu eingerichtet ist, den Container (2) für den Kontrollvorgang auf dem stationären Traggestell (15) abzustellen und nach dem Kontrollvorgang von dem stationären Traggestell (15) aufzunehmen.

5. Umschlaganlage (1) mit einem System nach einem der Ansprüche 1 bis 4, **dadurch gekennzeichnet, dass** die Umschlaganlage (1) in einem Hafenbereich angeordnet ist und die Container (2) Seefracht-Container sind.

## Claims

1. System for the contactless inspection of containers (2), particularly ISO-containers, within a loading and unloading plant (1), having an inspection station (12), having at least one screening device (14, 16) arranged in the inspection station (12), having a driverless transport vehicle (10) which is floor-bound, has rubber tyres and is guided by automatic operation, wherein the driverless transport vehicle (10) is configured to transport the container (2) to be inspected to and away from the inspection station (12), **characterised in that** the driverless transport vehicle (10) is configured to set down the container (2) for the inspection process in the inspection station (12), the at least one screening device (14, 16) is configured to move along the container (2) and in this case inspect the container (2), and the driverless transport vehicle (10) is configured to pick up the container (2) after the inspection process in the inspection station (12).

2. System as claimed in claim 1, **characterised in that** the at least one screening device comprises a first screening device (14) which is configured to horizontally screen the container (2).

3. System as claimed in claim 1 or 2, **characterised in that** the system comprises a second screening device (16) which is configured to vertically screen the container (2).

4. System as claimed in any one of claims 1 to 3, **characterised in that** a stationary support frame (15) is arranged in the inspection station (12) in the region of the at least one screening device (14, 16), the driverless transport vehicle (10) is configured to set down the container (2) for the inspection process on the stationary support frame (15) and, after the inspection process, pick up the container from the stationary support frame (15).

5. Loading and unloading plant (1) having a system as claimed in any one of claims 1 to 4, **characterised in that** the loading and unloading plant (1) is arranged in a port area and the containers (2) are sea-freight containers.

## Revendications

1. Système de contrôle sans contact de conteneurs (2), en particulier de conteneurs ISO, à l'intérieur d'une installation de transbordement (1) comportant une station de contrôle (12), au moins un dispositif radiographique (14, 16) disposé dans la station de commande (12), un véhicule de transport sans conducteur (10) lié au sol, monté sur pneus en caoutchouc et fonctionnant en mode automatique, le véhicule de transport sans conducteur (10) étant adapté pour transporter le conteneur (2) à contrôler vers la station de contrôle (12) et depuis la station de contrôle (12), **caractérisé en ce que** le véhicule de transport sans conducteur (10) est adapté pour placer le conteneur (2) en vue de l'opération de contrôle à la station de contrôle (12), **en ce que** l'au moins un dispositif radiographique (14, 16) est adapté pour se déplacer le long du conteneur (2) tout en contrôlant le conteneur (2) et **en ce que** le véhicule de transport sans conducteur (10) est adapté pour prendre le conteneur (2) après l'opération de contrôle à la station de contrôle (12).

2. Système selon la revendication 1, **caractérisé en ce que** l'au moins un dispositif radiographique comporte un premier dispositif radiographique (14) qui est adapté pour radiographier le conteneur (2) horizontalement.

3. Système selon la revendication 1 ou 2, **caractérisé en ce que** le système comprend un second dispositif radiographique (16) qui est adapté pour radiographier le conteneur verticalement.

4. Système selon l'une des revendications 1 à 3, **caractérisé en ce que** un cadre de support fixe (15) est disposé dans la zone d'au moins un dispositif radiographique (14, 16) de la station de contrôle (12), **en ce que** le véhicule de transport sans conducteur (10) est adapté pour placer le conteneur (2) sur le cadre de support fixe (15) en vue de l'opération de contrôle et le retirer du cadre de support fixe (15) après l'opération de contrôle.

5. installation de transbordement (1) comprenant un système selon l'une des revendications 1 à 4, **caractérisé en ce que** l'installation de transbordement (1) est disposée dans une zone portuaire et les conteneurs (2) sont des conteneurs de fret maritime.
